# EUROPEAN PATENT SPECIFICATION

(11) **EP 4 477 344 B1**
(45) Date of publication and mention of the grant of the patent: **08.07.2026**
(21) Application number: 23880192.2
(22) Date of filing: 17.10.2023
(51) Int. Cl.: H01M 10/0583, H01M 50/536, H01M 4/134, H01M 10/0525, H01M 10/0585, H01M 10/04, H01M 50/46, B23K 20/10

(54) **METHOD FOR MANUFACTURING ELECTRODE ASSEMBLY**
VERFAHREN ZUR HERSTELLUNG EINER ELEKTRODENANORDNUNG
PROCÉDÉ DE FABRICATION D'ENSEMBLE ÉLECTRODE

(30) Priority: 21.10.2022 KR 20220136203; 26.09.2023 KR 20230129310
(43) Date of publication of application: 18.12.2024
(73) Proprietor: LG Energy Solution, Ltd., Seoul 07335 (KR)
(72) Inventor: KWON, Soon Kwan, Daejeon 34122 (KR); LEE, Changhoon, Daejeon 34122 (KR); LEE, Hyunsoo, Daejeon 34122 (KR); LEE, Junghoon, Daejeon 34122 (KR)
(74) Representative: Goddar, Heinz J.
(86) International application number: PCT/KR2023/016079
(87) International publication number: WO 2024/085615

(56) References cited:
- WO-A1-2021/250803
- CN-A- 111 244 528
- JP-A- H10 106 612
- KR-A- 20170 000 257
- KR-A- 20190 079 961
- US-A1- 2022 059 875
- US-B2- 8 956 766

## Description

### [Technical Field]

The present invention relates to a method of manufacturing an electrode assembly. Specifically, the present invention relates to a method of manufacturing an electrode assembly utilizing a negative electrode structure having a lithium metal layer interposed between two separating films, comprising cutting a portion of the lithium metal layer protruding in the width direction to form a negative electrode tab, and joining the negative electrode tab.

This application claims the benefit of priority to Korean Patent Application No. 10-2022-0136203 filed on October 21, 2022, and Korean Patent Application No. 10-2023-0129310 filed on September 26, 2023.

### [Background Art]

In recent years, there has been a growing interest in energy storage technology. As application areas are expanding to the range from mobile phones, camcorders and laptop PCs to energy for electric vehicles, efforts for research and development are being embodied. In this regard, electrochemical devices are one of the most promising areas, and especially, the development of secondary batteries is drawing attention as the batteries with miniaturization and light weight, and capable of charging and discharging with high capacity, in light of the recent trend toward miniaturization and light weight of electronic devices.

Secondary batteries are also categorized by the structure of the electrode assembly consisting of positive electrode/separating film/negative electrode. For example, electrode assemblies are categorized into jelly-roll (wound) electrode assemblies, which are the wound long sheet of positive electrodes and negative electrodes with separating films, and stacked electrode assemblies, wherein multiple positive electrodes and negative electrodes cut into predetermined sized units with separating films are stacked sequentially.

However, these conventional electrode assemblies suffer from several problems.

First, the jelly-roll electrode assembly is made by winding the long sheet of positive electrodes and negative electrodes in a dense state, thereby to have a cylindrical or elliptical cross-section. In such a structure, stresses caused by the expansion and contraction of the electrodes during charge and discharge accumulate in the electrode assembly, and when such stress accumulation exceeds a certain limit, deformation of the electrode assembly occurs. Furthermore, the deformation of the electrode assembly may cause uneven spacing between the electrodes, resulting in a sharp decrease in the performance of the battery, and an internal short circuit may occur, threatening the safety of the battery. Furthermore, since the jelly-roll electrode assembly requires winding a long sheet of the positive electrodes and negative electrodes, it is difficult to wind the positive electrodes and negative electrodes quickly while maintaining a constant spacing between the positive electrodes and negative electrodes, resulting in a decrease in productivity.

Second, the stacked electrode assembly requires sequential stacking of multiple positive electrodes and negative electrode units. In this process, since a separate pole plate transfer process is required to manufacture the unit, and the sequential stacking process requires a lot of time and effort, the stacked electrode assembly has the problem of low productivity.

To solve these problems, a stackable-foldable electrode assembly with an advanced structure that is a hybrid of the jelly-roll type and stacked type has been developed. The stackable-foldable electrode assembly has a structure in which bi-cells or full cells stacked with separating films between the positive electrodes and negative electrodes of a predetermined unit are wound using a long continuous separating film sheet (foldable separating film).

The stackable-foldable electrode assembly typically connects the electrodes of each layer by extending separating films that are easier to fold, rather than extending the electrodes. In this process, the electrodes of each layer are supplied in a cut state for formation of the electrode assembly, as in the stacked electrode assembly. In the relevant art, if the secondary battery is composed of materials that are not easily cut or folded among a variety of conventional electrode materials for secondary batteries in the art, the general stackable-foldable electrode assembly is more suitable. On the other hand, lithium metal, which is well-known as a negative electrode material for secondary batteries in the art, may not be suitable for conventional stackable-foldable electrode assemblies because it is not easy to be processed by, such as, cutting, due to its physical properties such as high ductile and viscosity, and it is relatively easy to be folded.

Patent reference 2 discloses a battery cell that has a composite negative electrode that includes a first electrolyte layer, a negative electrode sheet, and a second electrolyte layer that are sequentially stacked and a positive electrode. The composite negative electrode is a continuous zigzag folded layer, and a containing layer is formed between adjacent folded layers. A positive electrode sheet is accommodated in the accommodating layer. The first electrolyte layer and the second electrolyte layer are solid or gel electrolytes. The first electrolyte layer and the second electrolyte layer include a separator and solid or gel electrolytes supported on both surfaces of the separator.

After continuous research on the structure of the electrode assembly, the inventor(s) of the present invention has designed a structure suitable for electrode assemblies, especially containing lithium metal as a negative electrode, and has completed the present invention. In the manufacturing method of the electrode assembly according to the present invention, processing of the lithium metal can be minimized, which is expected to improve the productivity of the electrode assembly.

### [patent references]

(Patent reference 1) Korean Patent Laid-open Publication No. 10-2021-0006231
(Patent reference 2) Chinese Patent Laid-open Publication CN 111 244 528 A

### [Disclosure]

### [Technical Problem]

The present invention seeks to provide a method of manufacturing an electrode assembly utilizing a negative electrode structure comprising a lithium metal layer interposed between two separating films, the method comprising the steps of cutting a portion of the lithium metal layer protruding in the width direction to form a negative electrode tab, and joining the negative electrode tab, wherein the electrode assembly is a stackable-foldable electrode assembly with a novel structure utilizing a negative electrode structure having a negative electrode comprising lithium metal interposed between two separating films.

### [Technical Solution]

According to a first aspect of the present invention, the present invention provides a method of manufacturing an electrode assembly.

In one embodiment of the present invention, the manufacturing method comprises the steps of (1) positioning a lithium metal layer to protrude in a width direction between two separating films, (2) manufacturing a negative electrode structure by joining the lithium metal layer and the separating films, (3) laminating one positive electrode on the negative electrode structure, and folding the negative electrode structure in the width direction to enclose the positive electrode, (4) repeating the step (3) to manufacture an electrode laminate comprising a plurality of positive electrodes, and (5) cutting corner portions of the lithium metal layer protruding in the width direction to form negative electrode tabs, and joining the negative electrode tabs,
wherein corner portions of the lithium metal layer protruding in step (5) are cut such that the negative electrode tabs in the electrode assembly are separated into separate layers.

In one embodiment of the present invention, the lithium metal layer and the separating film have the same length.

In one embodiment of the present invention, in step (2), the lithium metal layer and the separating film are joined by placing rolls on both sides and pressing them sequentially.

In one embodiment of the present invention, the total number of positive electrodes laminated between the negative electrode structure in the electrode laminate prepared in step (4) is 2n (wherein n is a natural number).

In one embodiment of the present invention, the positive electrode included in the electrode laminate prepared in step (4) includes a positive electrode active material layer and a current collector supporting the positive electrode active material layer.

In one embodiment of the present invention, the positive electrode included in the electrode laminate prepared in step (4) comprises a positive electrode tab of a notched current collector, wherein the positive electrode tab is positioned in an opposite direction to the negative electrode tab in step (5).

In one embodiment of the present invention, in step (5), the negative electrode tabs are formed by utilizing ultrasonic cutting, the negative electrode tabs are joined by utilizing ultrasonic welding, and the ultrasonic cutting and ultrasonic welding are performed simultaneously.

In one embodiment of the present invention, in step (5), a corner portion of the lithium metal layer protruding from each layer of the electrode assembly is cut by ultrasonic cutting, and a center portion of the protruding lithium metal layer is joined by ultrasonic welding.

In one embodiment of the present invention, the method of manufacturing the electrode assembly further comprises the step of (6) bonding a lead to the joined negative electrode tab.

### [Effects of the present invention]

Since lithium metal, which is utilized as the negative electrode in lithium secondary batteries, is not easy to be processed, excessive processing of lithium metal can lead to high defect rates of finished products. For example, when notching lithium metal, lithium metal is deposited on the blade, making it difficult to produce lithium metal having a consistent shape, and when repeatedly using a blade contaminated by lithium metal deposition, contamination may accumulate and affect the product. Therefore, in the manufacturing method of the electrode assembly according to the present invention, processing of the lithium metal can be minimized by cutting the lithium metal layer at one time after manufacturing the electrode laminate to form a negative electrode tab, and joining the negative electrode tab. By minimizing the processing of the lithium metal in this way, not only can the defect rate of the finished product be reduced, but also the processability can be improved, thereby improving the productivity of the electrode assembly.

### [Description of Drawings]

FIG. 1 is a schematic illustration of a process by which a negative electrode structure is manufactured by roll pressing, in accordance with one embodiment of the present invention.
FIG. 2 is a front view schematically illustrating an electrode laminate according to one embodiment of the present invention.
FIG. 3 is a schematic plan view of an electrode laminate according to one embodiment of the present invention.
FIG. 4 is an enlargement of the two-dot chain line in FIG. 3, schematically illustrating the cut and weld positions in a lithium metal layer protruding in the width direction.
FIG. 5 is a left side view illustrating that tabs are joined in an electrode assembly according to one embodiment of the present invention. In FIG. 5, folding portions of the negative electrode structure, which can be seen in the side view, are omitted in order to clearly illustrate the respective layer portions.
FIG. 6 is a left side view illustrating that a tab is joined to lead in an electrode assembly according to one embodiment of the present invention. In FIG. 6, folding portions of the negative electrode structure, which can be seen in the side view, are omitted in order to clearly illustrate the respective layer portions.

### [Best Mode]

The detail of the embodiment of the present invention is provided in the following descriptions. It should be noted that in assigning reference numerals to the components in each drawing, identical components, even in different drawings, are given the same numerals as much as possible. In addition, in describing the embodiments, if a detailed description on a related known constitution or feature is deemed to interfere with an understanding of the embodiments, the detailed description is omitted.

In addition, terms such as first, second, A, B, (a), (b), and the like may be used to describe components of the embodiments. Such terms are intended only to distinguish one component from another, and the nature, sequence or order of such components is not limited by such terms. When a component is described as being "connected," "coupled," or "abutted" to another component, it is to be understood that the component may be directly connected or contacted to the other component, but another component may be "connected," "coupled," or "abutted" between these components.

Components included in one embodiment, and components having common functions, are described using the same terms in other embodiments. Unless otherwise indicated, descriptions in one embodiment may be applied to other embodiments, and specific descriptions which are redundant are omitted.

The present invention relates to a method for manufacturing an electrode assembly comprising a negative electrode structure with a lithium metal layer interposed between two separating films. Conventionally, when manufacturing an electrode assembly comprising lithium metal for the negative electrode, excessive lithium processing may result in not only poor processability, but also low reliability of the manufactured product. However, in the method of manufacturing an electrode assembly according to the present invention, processing of the lithium metal can be minimized by cutting the lithium metal layer to form a negative electrode tab at one time after manufacturing the electrode laminate, and joining the negative electrode tab. By minimizing the processing of the lithium metal in this way, not only can the defect rate of the finished product be reduced, but also the processability can be improved, thereby improving the productivity of the electrode assembly.

The terms "electrode assembly" and "electrode laminate" are used herein. The term "electrode assembly" is to be interpreted in a broader sense than the term "electrode laminate," and any structure after the positive electrode, negative electrode, and separating film are stacked may be referred to as an electrode assembly. Thus, a structure having stacked positive electrode, negative electrode, and separating film, a structure having a tab formed after the positive electrode, negative electrode, and separating film are stacked, a stacked structure, a structure having a tab formed and bonded after the positive electrode, negative electrode, and separating film are stacked, and a structure having lead bonded to the tab formed after the positive electrode, negative electrode, and separating film are stacked can all be electrode assemblies. In contrast, "electrode laminate" refers only to a structure in which a positive electrode, negative electrode, and separating film are laminated. Since the positive electrode can be stacked with a tab formed by notching out a current collector, an electrode laminate can include a positive electrode tab.

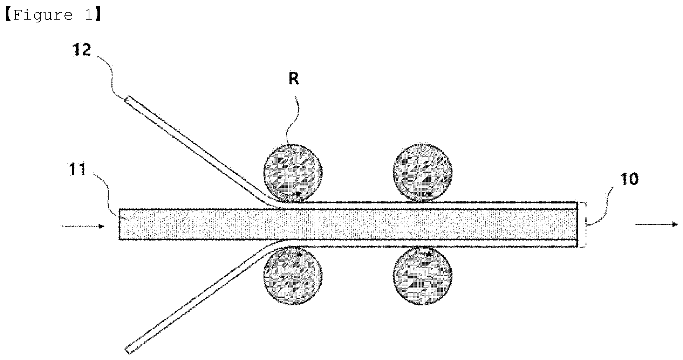

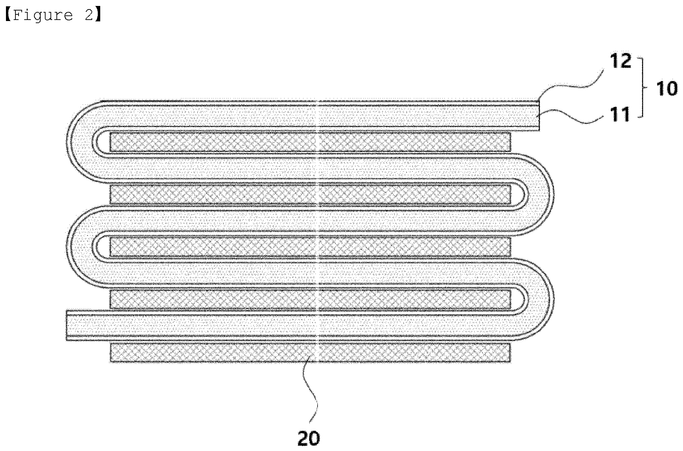

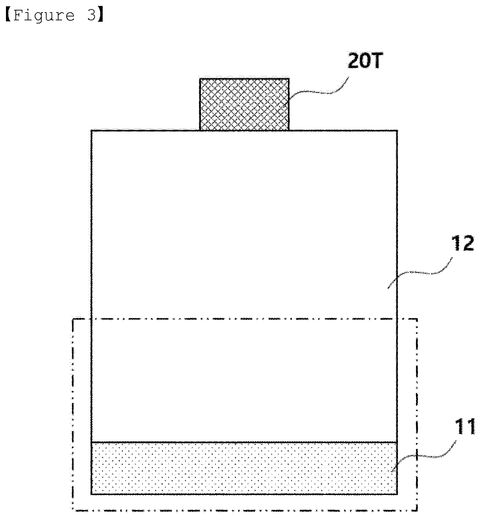

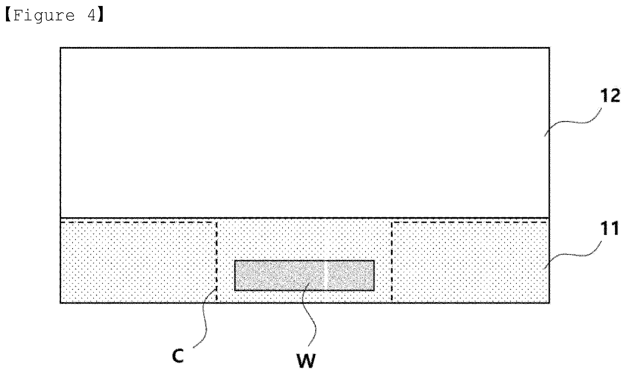

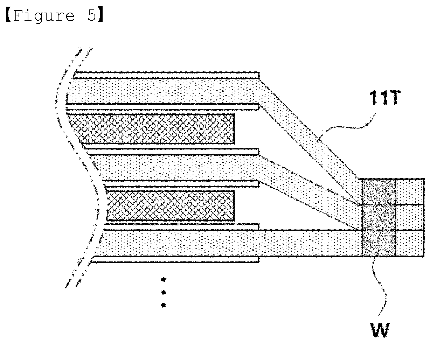

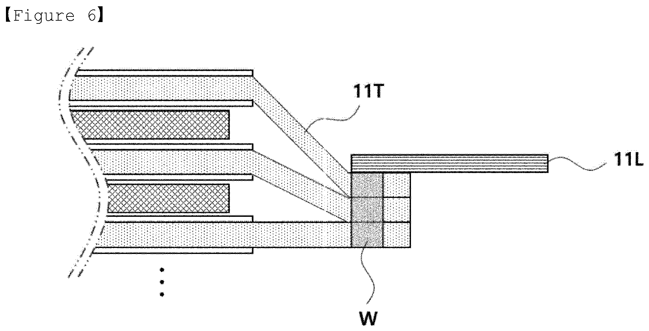

As used herein, the terms "longitudinal direction," "width direction" and "height direction" (or "thickness direction) are used. As used herein, "longitudinal direction" refers to a side-to-side direction in frontal views such as FIGS. 1 and 2 and in plan views such as FIGS. 3 and 4, and an indistinguishable front-to-back direction in left side views such as FIGS. 5 and 6. In this specification, "width direction" refers to an indistinguishable front-to-back direction in frontal views such as FIGS. 1 and 2, an up-and-down direction in plan views such as FIGS. 3 and 4, and a left-to-right direction in left views such as FIGS. 5 and 6. In this specification, "height direction" refers to an up-and-down direction in frontal views such as FIGS. 1 and 2, an indistinguishable front-to-back direction in plan views such as FIGS. 3 and 4, and an up-and-down direction in left side views such as FIGS. 5 and 6.

A method of manufacturing an electrode assembly according to one embodiment of the present invention includes the step of positioning a lithium metal layer to project in the width direction between two separating films. As used herein, the two separating films consisting of the negative electrode structure may be referred to simply as separating films where no particular distinction is necessary, or as first and second separating films where a distinction is necessary. Here, the protruding lithium metal layer is subsequently utilized to form the tabs, and in the same direction, the positive electrode does not protrude than the separating film, so that the lithium metal layer and the positive electrode do not touch each other. In the case of the positive electrode tab, like the negative electrode tab, it is positioned so that it protrudes in the width direction than the separating film, but if the lithium metal layer protruding in the width direction as in the present invention is subsequently cut, the positive electrode tab protrudes in the opposite direction to the direction in which the lithium metal layer protrudes, since it inevitably meets the positive electrode tab before then. The lithium metal layer includes lithium metal, which can be broadly construed to mean any lithium metal, even if a certain component is added to lithium or lithium metal is in the form of an alloy with a certain component, provided that it has no significant difference in physical properties from lithium metal, so that the same problems can occur when applied to conventional electrode assemblies as lithium metal.

A method of manufacturing an electrode assembly according to one embodiment of the present invention includes the step of laminating a lithium metal layer and a separating film to manufacture a negative electrode structure. Here, laminating means that the lithium metal layer and the separating film are integrated and utilized in the manufacturing process of the electrode assembly as a single constitution, and does not necessarily require that the lithium metal layer and the separating film are bonded with an adhesive. Since lithium metal is soft and tacky in relation to other materials, the lithium metal and the separating film can be joined relatively easily by applying a certain level of pressure.

In a method of manufacturing an electrode assembly according to one embodiment of the present invention, lamination of the lithium metal layer and the separating film can be accomplished by sequentially pressing them by positioning rolls on both sides. For better understanding, FIG. 1 provides a drawing schematically illustrating a process in which a negative electrode structure is made by roll pressing according to one embodiment of the present invention. The roll (R) for manufacturing the negative electrode structure (10) may preferably be a nip roll that can be pressed from both sides, as shown in FIG. 1. In the nip roll, the intensity of the pressurization can be adjusted by adjusting the gap between the rolls. In one embodiment of the present invention, the lithium metal layer and the separating film are joined using a roll because the negative electrode structure can be manufactured continuously. Although it is possible to manufacture the negative electrode structure by cutting the lithium metal layer and the separating film to be used in one electrode assembly and then providing them to the nip roll to manufacture the negative electrode structure, it may be beneficial to improve processability to continuously provide the lithium metal layer (11) and the separating film (12), and cut them to the required length, while continuously manufacturing the negative electrode structure (10).

As described above, since the lithium metal layer is positioned to protrude in the width direction between the separating films, and then the lithium metal layer and the separating films are joined, the width of the lithium metal layer may be longer than the width of the separating films. However, since the lithium metal layer and the separating film are cut at the same time in the manufacturing process of the continuous negative electrode structure, the lengths of the lithium metal layer and the separating film may be the same. However, depending on the method of cutting the negative electrode structure, there may be a slight difference in the lengths of the negative electrode and the separating film, and in some cases, the end of the separating film may be bent toward the center of the negative electrode structure. Even if the negative electrode structure has the same length of the negative electrode and the separating film during the feeding process, when applied to the electrode assembly, the length of the lithium metal layer may be extended due to the ductility of the lithium metal during the folding process. Therefore, in one embodiment of the present invention, the same length of the negative electrode and the separating film means that the negative electrode and the separating film can be cut at one time and have substantially the same length, and in an actual product, the end of the negative electrode and the end of the separating film may not be located on the same line depending on the situation.

A method of manufacturing an electrode assembly according to one embodiment of the present invention includes the steps of laminating one positive electrode on a negative electrode structure, and folding the negative electrode structure in the width direction to enclose the positive electrode. An electrode assembly according to one embodiment of the present invention includes one negative electrode structure and a plurality of positive electrodes. Although the negative electrode structure is one, the negative electrode structure can be folded in the width direction to form a plurality of layers. As used herein, folding in the width direction means dividing the length of the negative electrode structure into two or more lengths by folding. Since the negative electrode structure is much longer in the longitudinal direction than in the width direction, it is easy to form a plurality of layers by folding, and the negative electrode structure is free to expand when it is manufactured continuously.

A method of manufacturing an electrode assembly according to one embodiment of the present invention includes the step of repeating the processes of laminating a positive electrode and folding a negative electrode structure in the width direction to wrap around the positive electrode to manufacture an electrode laminate comprising a plurality of positive electrodes. To provide a better understanding of the electrode laminate, FIG. 2 provides a front view schematically illustrating an electrode laminate according to one embodiment of the present invention. As can be seen in FIG. 2, when the negative electrode structure (10) is folded to wrap around the positive electrode (20), the negative electrode structure has an orientation opposite to the initial orientation. When the positive electrode (20) is laminated sequentially in this manner, the negative electrode structure (10) has a zigzag shape. Therefore, the folding portions of the negative electrode structure alternate from left to right. If a positive electrode is not placed in the space between the folds of the negative electrode structure, or if a plurality of positive electrodes are placed therebetween, the efficiency of the battery may decrease because a potential difference does not occur between the layers of the negative electrode structure or positive electrodes stacked in succession.

In an electrode laminate according to one embodiment of the present invention, the total number of positive electrodes laminated between the negative electrode structure may be 2n (where n is a natural number). As described above, when the negative electrode structure is folded to wrap around the positive electrode, the negative electrode structure has an orientation opposite to the initial orientation. Here, in the electrode laminate, if the total number of positive electrodes laminated between the negative electrode structure is even, the negative electrode structure has the same orientation as the initial orientation, such that in the electrode laminate, one end of the negative electrode structure is opposite to the other end, as shown in FIG. 2. In this case, it may be easier to finish the electrode laminate, such as by wrapping the electrode laminate with the negative electrode structure, since each end is close to one side. According to one embodiment of the present invention, in addition to the positive electrode laminated between the negative electrode structure, a positive electrode may be located at the top or bottom of the electrode laminate, and a positive electrode may be located at the top and bottom of the electrode laminate. In this case, the total number of positive electrodes included in the electrode laminate may be 2n+1 or 2n+2.

According to one embodiment of the present invention, the positive electrode comprises a positive electrode active material layer and a current collector supporting the positive electrode active material layer. The positive electrode has a structure in which a positive electrode active material layer is formed on at least one side, more specifically both sides of the current collector. The positive electrode active material layer comprises a positive electrode active material and may further comprise a conductive material, a binder and an additive. The current collector, positive electrode active material, conductive material, binder or additive is not particularly limited as long as it is commonly used in the art.

The positive electrode current collector supports the positive electrode active material and is not particularly limited to having a high conductivity without causing any chemical changes in the battery. According to one embodiment of the present invention, the positive electrode current collector may be made of copper, stainless steel, aluminum, nickel, titanium, palladium, calcined carbon, copper or stainless steel whose surface is treated with carbon, nickel or silver, or aluminum-cadmium alloy.

The positive electrode current collector can form microscopic irregularities on its surface to strengthen the binding with the positive electrode active material, and various forms can be used, such as films, sheets, foils, meshes, nets, porous materials, foams, non-woven materials, etc.

As the positive electrode active material, a lithium-containing transition metal oxide may be used. According to one embodiment of the present invention, any one or a mixture of the two or more selected from the group consisting of LiCoO₂, LiNiO₂, LiMnO₂, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂ (wherein 0<y<1), LiNi_{1-y}Mn_{y}O₂ (wherein 0<y<1) , Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), LiCoPO₄ and LiFePO₄. In addition to these oxides, sulfides, selenides or halides can be used.

The positive electrode active material may comprise a sulfur compound. According to one embodiment of the present invention, the sulfur compound may be at least one selected from the group consisting of elemental sulfur (S₈), organosulfur compound Li₂Sₙ (wherein n≥1), and carbon-sulfur polymer ((C₂Sₓ)ₙ, wherein x is 2.5 to 50, and n≥1). Preferably, inorganic sulfur (S₈) may be used.

When the positive electrode active material comprises a sulfur compound, the electrode assembly according to one embodiment of the present invention can be applied to a lithium-sulfur battery. Since the sulfur itself contained in the positive electrode active material is not electrically conductive, it may be used in combination with a conductive material such as a carbon material. Accordingly, the sulfur is included in the form of a sulfur-carbon composite, and preferably, the positive electrode active material may be a sulfur-carbon composite.

In view of the foregoing, the positive electrode is relatively less easily folded and more easily cut compared to the negative electrode. Thus, the positive electrode may be cut to a suitable size so that a plurality of positive electrodes are applied to the interior of the electrode assembly.

According to one embodiment of the present invention, the positive electrode included in the electrode laminate comprises a positive electrode tab of a notched current collector, wherein the positive electrode tab is positioned to protrude from the separating film in a direction opposite to the direction in which the lithium metal layer protrudes. To facilitate understanding of the location of the lithium metal layer protruding from the separating film and the positive electrode tab, FIG. 3 provides a plan view schematically illustrating an electrode laminate according to one embodiment of the present invention. In the electrode assembly of a typical lithium secondary battery, the positive electrode tab and the negative electrode tab are spaced apart from each other, even if they are located in the same direction, to prevent a short circuit due to contact thereof. However, in the electrode laminate according to one embodiment of the present invention, the uncut protruding lithium metal layer (11) covers the entire length of the electrode assembly, as shown in FIG. 3, so the positive electrode tab (20T) cannot be spaced apart from the protruding lithium metal layer in the same direction. Furthermore, even if the lithium metal layer (11) and the positive electrode tab (20T) are spaced apart by being located in different layers, when the lithium metal layer is cut to form the negative electrode tab, the positive electrode tab may be cut together, which may be undesirable.

A method of manufacturing an electrode assembly according to one embodiment of the present invention includes the steps of cutting a portion of a lithium metal layer protruding in the width direction to form a negative electrode tab, and joining the negative electrode tab. The method of manufacturing an electrode assembly according to one embodiment of the present invention can form the negative electrode tabs at one time while the electrode laminate is manufactured, thereby minimizing the number of times the cutting device cuts the lithium metal. Furthermore, processability can be improved in that the tabs of each layer can be quickly cut at one time, and the tabs of each layer naturally line up when cut. An electrode assembly according to one embodiment of the present invention may have a stable structure when cut in that the lithium metal protruding in the width direction is continuous for each layer.

According to one embodiment of the present invention, a portion of the lithium metal layer protruding in the width direction from the separating film is cut so that the negative electrode tabs in the electrode assembly are separated into separate layers. In order to have the shape of a typical negative electrode tab, a corner portion of the lithium metal layer is cut, which allows the negative electrode tab to be separated into layers. The negative electrode tabs of each layer are subsequently bonded together, which can be difficult if the negative electrode tabs are not separated into layers.

According to one embodiment of the present invention, the formation of the negative electrode tabs is performed by ultrasonic cutting, and the joining of the negative electrode tabs is performed by ultrasonic welding. For the ultrasonic cutting, an ultrasonic cutter conventionally used in the art for metal processing may be used. The ultrasonic cutter generates high-frequency energy from a connected generator, the energy is transmitted to the cutting edge, and when the cutting edge is brought into contact with the lithium metal to be cut, vibration friction heat is generated and the lithium metal layer is cut. For the ultrasonic welding, an ultrasonic welding machine conventionally used in the art may be used for metal processing. The ultrasonic welding machine generates high-frequency energy from a connected generator, transmits the energy to a horn or sonotrode, and when the horn or sonotrode contacts the lithium metal to be joined, applies ultrasonic vibration to the lithium metal layer to form a solid-phase weld on the joining surface.

According to one embodiment of the present invention, the ultrasonic cutting and the ultrasonic welding are performed simultaneously. Since the positions of the ultrasonic cutting and the ultrasonic welding do not overlap each other, the ultrasonic cutting and the ultrasonic welding can proceed simultaneously. To provide a better understanding of the positions of ultrasonic cutting and ultrasonic welding, FIG. 4 provides a diagram schematically illustrating a cutting position and a welding position of the lithium metal layer protruding in the width direction. FIG. 4 is an enlarged view of the two-dot chain line of FIG. 3. In FIG. 4, the ultrasonic cutting is carried out along the dashed line and is labeled **C.** Also, in FIG. 4, the location of the ultrasonic weld is carried out in the rectangular area, and is labeled **W.** As shown in FIG. 4, the corner portions of the lithium metal layer protruding from each layer of the electrode assembly can be cut by ultrasonic cutting, and the center portions of the protruding lithium metal layer can be joined by ultrasonic welding. The ultrasonic cutting is performed in the width direction, which is the up-and-down direction in FIG. 4, and the longitudinal direction, which is the left-and-right direction in FIG. 4, respectively, wherein performing in the width direction first may be more advantageous to proceed simultaneously with the ultrasonic welding. Furthermore, it may be desirable to cut in the left-to-right direction so that the cutting almost abuts the separating film as shown in FIG. 4.

In an electrode assembly according to one embodiment of the present invention, the length of the negative electrode tab may be appropriately adjusted in consideration of the length of each layer. Since the negative electrode is continuous and not cut, the length of each layer can be expressed as the length of the positive electrode. The lengths refer to the longitudinal direction of the negative electrode structure, which means the left-to-right direction in FIG. 4. The length of the negative electrode tab may refer to the length of the protruding lithium metal layer remaining after cutting the lithium metal layer along the broken line in FIG. 4 in the left-and-right direction. According to one embodiment of the present invention, the length of the negative electrode tab in the electrode assembly is less than or equal to 50% of the length of the positive electrode. Specifically, the length of the negative electrode tab may be 50% or less, 45% or less, 40% or less, 35% or less, 30% or less, of the length of the positive electrode. If the length of the negative electrode tab is formed to be too long, the processability of joining the negative electrode tabs may be decreased.

The negative electrode tabs formed by cutting are located on each layer, but can be joined together by bonding. To provide a better understanding of the shape of the negative electrode tabs after bonding, FIG. 5 provides a left side view illustrating the bonded shape of the tabs in an electrode assembly according to one embodiment of the present invention. Viewing from the left or right, rather than from the front, provides a better view of the bonded tabs. In an electrode assembly according to one embodiment of the present invention, a folding portion may be present such that the positive electrode inside may not be readily apparent when the folding portion is frontal in the left side view; in FIG. 5, the folding portion of the negative electrode structure, which can be seen in the side view, is omitted in order to clearly illustrate each layer portion. As shown in FIG. 5, the negative electrode tabs (11T) are brought together by welding (W).

The method of manufacturing an electrode assembly according to one embodiment of the present invention further comprises the step of bonding a lead to the joined negative electrode tab. To provide a better understanding of the shape of the lead bonded to the negative electrode tab, FIG. 6 provides a left side view illustrating the shape of the lead bonded to the tab in an electrode assembly according to one embodiment of the present invention. FIG. 6 is illustrated in the same manner as FIG. 5. **A** negative electrode lead (11L) is positioned on the bonded negative electrode tab and is bonded to the negative electrode tab, as shown in FIG. 6. The negative electrode lead (11L) serves to electrically connect the negative electrode located on the inside of the battery with the outside of the battery, and the negative electrode lead may be made of any conductive material commonly used in the art.

The electrode assembly according to one embodiment of the present invention comprises no separate current collector supporting the lithium metal layer on the negative electrode in addition to a lithium metal layer. Since the negative electrode does not include a current collector, the amount of negative electrode active material loaded within the electrode assembly can be increased, which can contribute to improved performance of the battery. When the negative electrode is mainly composed of lithium metal, processing such as cutting may not be easy due to the ductility and viscosity of the lithium metal, and in an electrode assembly according to one embodiment of the present invention, processability can be improved by minimizing cutting while applying the negative electrode in the form of a negative electrode structure.

The separating film covering both sides of the negative electrode in the negative electrode structure is not particularly limited in terms of type, provided that it does not include a binder on its surface. The separating film may be a nonwoven or polyolefin-based porous material made of, for example, a glass fiber having a high melting point or a polyethylene terephthalate fiber, but is not limited thereto.

The material of the porous material is not particularly limited in the present invention, but any porous material conventionally used in electrochemical devices can be used. According to one embodiment of the present invention, the porous material may include at least one selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

In that the electrode assembly according to one embodiment of the present invention forms the basic structure of the electrode assembly by folding one negative electrode structure, the negative electrode structure should not be excessively thick so that it can be flexibly folded, and a certain level of lithium metal, a negative electrode active material, should be secured in the negative electrode structure in consideration of the performance of the battery. According to one embodiment of the present invention, the thickness of the lithium metal in the negative electrode structure accounts for 50% to 90% based on the total thickness of the negative electrode structure. Specifically, the thickness of the lithium metal may range from 50% to 90%, more specifically from 55% to 85%, and more particularly from 60% to 80%. When the lithium metal satisfies the above-described thickness range, it can help improve the processability and functionality of the electrode assembly. According to one embodiment of the present invention, since the negative electrode structure does not include a separate current collector, the thickness of the remaining portion excluding the lithium metal may refer to the thickness of two separating films.

According to one embodiment of the present invention, the thickness of the lithium metal may be from 10 µm to 90 µm. Specifically, the thickness of the lithium metal may be 10 µm or more, 20 µm or more, or 30 µm or more, and may be 70 µm or less, 80 µm or less, or 90 µm or less. The thickness of the lithium metal is not necessarily limited thereto, and may be appropriately adjusted according to the actual size of the battery.

In the electrode assembly according to one embodiment of the present invention, unlike the negative electrode structure, the positive electrode is cut in consideration of characteristics such as material, and applied between the cut and folded negative electrode structure. Although the positive electrode is distinct and independent from the negative electrode, in terms of, such as, including a current collector in addition to the positive electrode active material, the thickness may be adjusted in relation to the negative electrode or the negative electrode structure in consideration of the performance of the electrode. According to one embodiment of the present invention, the thickness of the positive electrode is greater than the thickness of the negative electrode structure. According to one embodiment of the present invention, the thickness of the positive electrode has a thickness of more than 100% and less than 400% with respect to the thickness of the negative electrode structure. Specifically, the thickness of the positive electrode may range from 100% greater than or less than 400%, specifically from 150% to 350%, and more specifically from 200% to 300%. When the positive electrode satisfies the above-described thickness range, it can be suitably matched with the negative electrode structure.

An electrode assembly according to one embodiment of the present invention is applied to an electrochemical device. The electrochemical device may comprise any device that performs an electrochemical reaction. For example, the electrochemical device may be any kind of primary battery, secondary battery, fuel battery, solar battery or capacitor. If the electrochemical device is a secondary battery, the electrochemical device may be a lithium secondary battery, which may include a lithium metal secondary battery, a lithium ion secondary battery, a lithium polymer secondary battery or a lithium ion polymer secondary battery.

All simple variations or modifications of the present invention fall within the scope of the present invention, and the specific scope for which protection is sought is to be clear by the appended claims.

### [Reference Numerals]

10: Negative electrode Structure
11: Negative electrode (Lithium metal layer)
11T: Negative electrode tap
11L: Negative electrode lead
12: Separating film
20: Positive electrode
20T: Positive electrode tab
R: Roll
C: Cutting position
W: Welding position

## Claims

1. A method of manufacturing an electrode assembly, comprising the steps of:
(1) positioning a lithium metal layer (11) to protrude in a width direction between two separating films (12),
(2) manufacturing a negative electrode structure (10) by joining the lithium metal layer (11) and the separating films (12),
(3) laminating one positive electrode (20) on the negative electrode structure (10), and folding the negative electrode structure (10) in the width direction to enclose the positive electrode (20),
(4) repeating the step (3) to manufacture an electrode laminate comprising a plurality of positive electrodes (20), and
(5) cutting corner portions of the lithium metal layer (11) protruding in the width direction to form negative electrode tabs (11T), and joining the negative electrode tabs (11T)
wherein corner portions of the lithium metal layer (11) protruding in step (5) are cut such that the negative electrode tabs (11T) in the electrode assembly are separated into separate layers.

2. The method of manufacturing an electrode assembly according to claim 1, wherein the lithium metal layer (11) and the separating film (12) have the same length.

3. The method of manufacturing an electrode assembly, according to claim 1, wherein in step (2), the lithium metal layer (11) and the separating film (12) are joined by sequentially pressing them by positioning rolls (R) on both sides.

4. The method of manufacturing an electrode assembly, according to claim 1, wherein the total number of positive electrodes (20) laminated between the negative electrode structure (10) in the electrode laminate manufactured in step (4) is 2n (n is a natural number).

5. The method of manufacturing an electrode assembly, according to claim 1, wherein the positive electrode (20) included in the electrode laminate manufactured in step (4) comprises a positive electrode (20) active material layer and a current collector supporting the positive electrode active material layer.

6. The method of manufacturing an electrode assembly, according to claim 1, wherein the positive electrode (20) included in the electrode laminate manufactured in step (4) comprises a positive electrode tab (20T) of a notched current collector, and the positive electrode tab (20T) is positioned in an opposite direction to the negative electrode tab (11T) in step (5).

7. The method of manufacturing an electrode assembly, according to claim 1, wherein in step (5), the negative electrode tabs (11T) are formed by utilizing ultrasonic cutting, the negative electrode tabs (11T) are joined by utilizing ultrasonic welding, and the ultrasonic cutting and ultrasonic welding are performed simultaneously.

8. The method of manufacturing an electrode assembly, according to claim 7, wherein in step (5), a corner portion of a lithium metal layer (11) protruding from each layer of the electrode assembly is cut by ultrasonic cutting, and a center portion of the protruding lithium metal layer (11) is joined by ultrasonic welding.

9. The method of manufacturing an electrode assembly, according to claim 1, wherein the method further comprises the step of (6) bonding a lead to the joined negative electrode tabs (11T).

## Patentansprüche

1. Verfahren zur Herstellung einer Elektrodenanordnung, umfassend die folgenden Schritte:
(1) Anordnen einer Lithiummetallschicht (11) dergestalt, dass sie in Breitenrichtung zwischen zwei Separatorschichten (12) hervorsteht,
(2) Herstellen einer negativen Elektrodenstruktur (10) durch Verbinden der Lithiummetallschicht (11) und der Separatorschichten (12),
(3) Laminieren einer positiven Elektrode (20) auf die negative Elektrodenstruktur (10) und Falten der negativen Elektrodenstruktur (10) in Breitenrichtung, um die positive Elektrode (20) einzuschließen,
(4) Wiederholen des Schritts (3), um ein Elektrodenlaminat herzustellen, das eine Vielzahl von positiven Elektroden (20) umfasst, und
(5) Abschneiden von in Breitenrichtung vorstehenden Eckbereichen der Lithiummetallschicht (11), um negative Elektrodenlaschen (11T) zu bilden, und Verbinden der negativen Elektrodenlaschen (11T)
wobei die in Schritt (5) hervorstehenden Eckbereiche der Lithiummetallschicht (11) so abgeschnitten werden, dass die negativen Elektrodenlaschen (11T) in der Elektrodenanordnung in separate Schichten getrennt werden.

2. Verfahren zur Herstellung einer Elektrodenanordnung nach Anspruch 1, wobei die Lithiummetallschicht (11) und die Separatorschicht (12) die gleiche Länge aufweisen.

3. Verfahren zur Herstellung einer Elektrodenanordnung nach Anspruch 1, wobei in Schritt (2) die Lithiummetallschicht (11) und die Separatorschicht (12) durch aufeinanderfolgendes Pressen mittels beidseitig angeordneter Walzen (R) verbunden werden.

4. Verfahren zur Herstellung einer Elektrodenanordnung gemäß Anspruch 1, wobei die Gesamtzahl der positiven Elektroden (20), die zwischen der negativen Elektrodenstruktur (10) in dem in Schritt (4) hergestellten Elektrodenlaminat laminiert sind, 2n beträgt (n ist eine natürliche Zahl).

5. Verfahren zur Herstellung einer Elektrodenanordnung nach Anspruch 1, wobei die in dem in Schritt (4) hergestellten Elektrodenlaminat enthaltene positive Elektrode (20) eine aktive Materialschicht der positiven Elektrode (20) und einen Stromkollektor umfasst, der die aktive Materialschicht der positiven Elektrode trägt.

6. Verfahren zur Herstellung einer Elektrodenanordnung gemäß Anspruch 1, wobei die in dem in Schritt (4) hergestellten Elektrodenlaminat enthaltene positive Elektrode (20) eine positive Elektrodenlasche (20T) eines gekerbten Stromkollektors umfasst und wobei die positive Elektrodenlasche (20T) in Schritt (5) in einer der negativen Elektrodenlasche (11T) entgegengesetzten Richtung positioniert wird.

7. Verfahren zur Herstellung einer Elektrodenanordnung gemäß Anspruch 1, wobei in Schritt (5) die negativen Elektrodenlaschen (11T) unter Verwendung von Ultraschallschneiden gebildet werden, wobei die negativen Elektrodenlaschen (11T) unter Anwendung von Ultraschallschweißen verbunden werden und wobei das Ultraschallschneiden und das Ultraschallschweißen gleichzeitig durchgeführt werden.

8. Verfahren zur Herstellung einer Elektrodenanordnung nach Anspruch 7, wobei in Schritt (5) ein Eckbereich einer Lithiummetallschicht (11), der aus einer jeweiligen Schicht der Elektrodenanordnung herausragt, durch Ultraschallschneiden abgeschnitten wird und wobei ein Mittelbereich der herausragenden Lithiummetallschicht (11) durch Ultraschallschweißen verbunden wird.

9. Verfahren zur Herstellung einer Elektrodenanordnung gemäß Anspruch 1, wobei das Verfahren ferner den Schritt (6) des Anbringens einer Leitung an den verbundenen negativen Elektrodenlaschen (11T) umfasst.

## Revendications

1. Procédé de fabrication d'un ensemble d'électrodes comprenant les étapes suivantes :
(1) positionnement d'une couche de lithium métallique (11) afin qu'elle dépasse dans le sens de la largeur entre deux pellicules de séparation (12),
(2) fabrication d'une structure d'électrode négative (10) en joignant la couche de lithium métallique (11) et les pellicules de séparation (12),
(3) stratification d'une électrode positive (20) sur la structure d'électrode négative (10), et repliage de la structure d'électrode négative (10) dans le sens de la largeur pour englober l'électrode positive (20),
(4) répétition de l'étape (3) pour fabriquer un stratifié d'électrodes comprenant une pluralité d'électrodes positives (20), et
(5) coupe de parties angulaires de la couche de lithium métallique (11) dépassant dans le sens de la largeur pour former des languettes d'électrode négative (11T), et jonction des languettes d'électrode négative (11T)
les parties angulaires de la couche de lithium métallique (11) saillantes à l'étape (5) étant coupées de sorte que les languettes d'électrode négative (11T) dans l'ensemble d'électrode soient séparées en couches distinctes.

2. Procédé de fabrication d'un ensemble d'électrodes selon la revendication 1, la couche de lithium métallique (11) et la pellicule de séparation (12) ayant la même longueur.

3. Procédé de fabrication d'un ensemble d'électrodes selon la revendication 1, dans lequel, à l'étape (2), la couche de lithium métallique (11) et la pellicule de séparation (12) sont reliées par pressage séquentiel en positionnant des rouleaux (R) sur les deux côtés.

4. Procédé de fabrication d'un ensemble d'électrodes selon la revendication 1, le nombre total d'électrodes positives (20) stratifiées entre la structure d'électrode négative (10) dans le stratifié d'électrodes fabriqué à l'étape (4) étant 2n (n étant un nombre naturel).

5. Procédé de fabrication d'un ensemble d'électrodes selon la revendication 1, l'électrode positive (20) comprise dans le stratifié d'électrode fabriqué à l'étape (4) comprenant une couche de matière active d'électrode positive (20) et un collecteur de courant supportant la couche de matière active de l'électrode positive.

6. Procédé de fabrication d'un ensemble d'électrodes selon la revendication 1, l'électrode positive (20) comprise dans le stratifié d'électrode fabriqué à l'étape (4) comprenant une languette d'électrode positive (20T) d'un collecteur de courant cranté, et la languette d'électrode positive (20T) étant positionnée dans une direction opposée à la languette d'électrode négative (11T) à l'étape (5).

7. Procédé de fabrication d'un ensemble d'électrodes selon la revendication 1, dans lequel, à l'étape (5), les languettes d'électrodes négatives (11T) sont formées par découpe ultrasonore, les languettes d'électrodes négatives (11T) sont assemblées par soudage ultrasonore, et la découpe ultrasonore et le soudage ultrasonore sont effectués simultanément.

8. Procédé de fabrication d'un ensemble d'électrodes selon la revendication 7, dans lequel, à l'étape (5), une partie angulaire d'une couche de lithium métallique (11) dépassant de chaque couche de l'ensemble d'électrode est découpée par ultrasons, et une partie centrale de la couche de lithium métallique saillante (11) est jointe par soudage ultrasonore.

9. Procédé de fabrication d'un ensemble d'électrodes selon la revendication 1, le procédé comprenant également l'étape de (6) fixation d'un conducteur aux languettes d'électrode négative jointes (11T).
